Europäisches Patentamt

(19) European Patent Office

Office européen des brevets

(11) Veröffentlichungsnummer: **0 089 632**
B1

(12) # EUROPÄISCHE PATENTSCHRIFT

(45) Veröffentlichungstag der Patentschrift:
14.08.85

(51) Int. Cl.⁴: **H 04 L 11/26,** H 04 L 9/00, H 04 K 1/00

(21) Anmeldenummer: 83102664.6

(22) Anmeldetag: 17.03.83

(54) **Verfahren und Anordnung zum Übertragen von Verschlüsselten Texten.**

(30) Priorität: **19.03.82 DE 3210081**

(43) Veröffentlichungstag der Anmeldung:
**28.09.83 Patentblatt 83/39**

(45) Bekanntmachung des Hinweises auf die Patenterteilung:
**14.08.85 Patentblatt 85/33**

(84) Benannte Vertragsstaaten:
**CH LI NL**

(56) Entgegenhaltungen:
**EP - A - 0 035 448
DE - A - 2 926 013**

**IEEE TRANSACTIONS ON COMMUNICATIONS, Vol. COM-29, No. 6, Juni 1981, New York, US M.E. SMID "Integrating the data encryption standard into computer networks" Seiten 762-772**

(73) Patentinhaber: **Siemens Aktiengesellschaft, Berlin und München Wittelsbacherplatz 2, D-8000 München 2 (DE)**

(72) Erfinder: **Markwitz, Wernhard, Dr.-Ing., Thalkirchner Strasse 107, D-8000 München 70 (DE)**
Erfinder: **Steng, Rainer, Zieblandstrasse 32, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung bezieht sich auf ein Verfahren zum Übertragen von verschlüsselten Texten gemäss dem Oberbegriff des Patentanspruches 1. Weiterhin bezieht sich die Erfindung auf eine Anordnung zur Durchführung des Verfahrens.

Aus der DE-A-2926013 ist ein Verfahren zur Übertragung von verschlüsselten Texten von einer sendenden Station zu einer empfangenden Station bekannt, bei dem in der empfangenden Station die Texte in einem Speicher gespeichert werden und nur an empfangsbefugte Personen ausgegeben werden. Die übertragenen Texte sind mit einem Nachrichtenkopf versehen, der den Namen der empfangsbefugten Person und eine Kennung enthält, welche den Text als vertraulich signalisiert. Wenn in der empfangenden Station die Kennung erkannt wird, werden die Texte in einen Empfangsspeicher gespeichert und es wird eine Meldung abgegeben, aus der hervorgeht, dass für die empfangsbefugte Person ein vertraulicher Text vorliegt. Nach der Eingabe eines Passwortes durch die berechtigte Person werden die Texte in der empfangenden Station entschlüsselt und an einer Ausgabeeinheit ausgegeben. Durch dieses bekannte Verfahren wird eine verhältnismässig hohe Zugriffssicherheit erreicht. Es besteht jedoch die Gefahr, dass eine unberechtigte Person in den Besitz des Passwortes kommt und sich Texte ausgeben lässt, die an eine andere Person adressiert sind.

Der Erfindung liegt daher die Aufgabe zugrunde, ein Verfahren und eine Anordnung zum verschlüsselten Übertragen von Texten anzugeben, bei deren Verwendung die Zugriffssicherheit weiter verbessert wird. Erfindungsgemäss wird die Aufgabe bei dem Verfahren der eingangs genannten Art durch die im kennzeichnenden Teil des Patentanspruchs 1 angegebenen Merkmale gelöst.

Der Erfindung liegt der Gedanke zugrunde, die empfangsberechtigte Person durch ein Codewort eindeutig zu kennzeichnen. Dieses Codewort kann in einem Teilnehmerverzeichnis enthalten sein und beispielsweise öffentlich zugänglich sein. Das Codewort wird zur Berechnung des aktuellen Schlüssels für die verschlüsselte Übertragung der Texte herangezogen. Mit Hilfe dieses aktuellen Schlüssels werden aus dem Codewort Prüfzeichen erzeugt und im Nachrichtenkopf zur empfangenden Station übertragen. Dort werden sie zusammen mit den verschlüsselten Texten im Empfangsspeicher gespeichert. In der empfangenden Station kann jederzeit geprüft werden, ob der richtige Schlüssel zum Entschlüsseln der gespeicherten Texte vorliegt und ob das im Nachrichtenkopf übertragene Codewort manipuliert wurde. Nach einer Überprüfung, ob das Codewort dem entsprechenden Passwort zugeordnet ist, werden die gespeicherten Texte ausgegeben.

Aus der EP-A-0035448 ist es bereits bekannt, für die Textverschlüsselung ein zusätzliches Codewort zu verwenden, welches separat übertragen wird und für die Entschlüsselung im Empfänger vorliegt. Die Bildung von Prüfzeichen auf der Sende- und der Empfangsseite sowie ein Prüfzeichenvergleich als Kriterium dafür, ob der empfangene Text entschlüsselt werden kann oder nicht, ist der EP-A-0035448 jedoch nicht zu entnehmen.

Zur Erzeugung der Prüfzeichen kann es günstig sein, wenn der aktuelle Schlüssel vor der Verschlüsselung mit dem Codewort mit der Zufallsfolge verschlüsselt wird.

Als Verknüpfungseinheit wird zweckmässigerweise ein allgemein bekannter DES-Verschlüsselungsbaustein verwendet. Dieser kann entsprechend einem Zuordnungsmodus oder einem Rückkopplungsmodus arbeiten. Der Zuordnungsmodus wird in vorteilhafter Weise bei der Erzeugung des aktuellen Schlüssels, des Prüfschlüssels und der Erzeugung des Prüfvektors eingesetzt. Der Einsatz im Rückkopplungsmodus erweist sich dann als zweckmässig, wenn die Pseudozufallsfolge für die Verschlüsselung des Klartexts erzeugt wird. In diesem Fall wird zweckmässigerweise aus dem Prüfschlüssel ein Eingangsvektor für die Verschlüsselungseinheit erzeugt.

Aus dem Prüfvektor werden die Prüfzeichen auf einfache Weise dadurch erzeugt, dass jeweils die niederwertigen Bits mit den höherwertigen Bits entsprechend einer Modulo-2-Addition verknüpft werden. Die Modulo-2-Addition erweist sich auch bei der Verschlüsselung der Zufallsfolge und des Codeworts vor der Erzeugung des aktuellen Schlüssels und vor der Erzeugung des Prüfvektors als zweckmässig.

Der Grundschlüssel kann als permanenter Grundschlüssel ausgebildet sein, der einem bestimmten Teilnehmerkreis fest zugeordnet ist, der beispielsweise an einem innerbetrieblichen Übertragungsnetz angeschlossen ist. Es besteht auch die Möglichkeit, einen persönlichen, temporären Grundschlüssel zu verwenden, der beispielsweise, entsprechend wie das Passwort, auf einer Ausweiskarte angeordnet ist, um auch an einer empfangenden Station, die nicht den Grundschlüssel enthält, die verschlüsselten Texte ausgeben zu können. Dies ist beispielsweise dann von Bedeutung, wenn die empfangsberechtigte Person sich auf einer Dienstreise befindet und die empfangende Station an einem anderen als dem innerbetrieblichen Netz angeschlossen ist und damit einen anderen Grundschlüssel aufweist.

Eine Durchführung des Verfahrens und eine Anordnung gemäss der Erfindung werden im folgenden anhand von Zeichnungen näher erläutert. Es zeigen:

Fig. 1 eine schematische Darstellung einer Anordnung zur verschlüsselten Übertragung von Texten,

Fig. 2 eine schematische Darstellung des Nachrichtenformats bei der Übertragung der verschlüsselten Texte,

Fig. 3 ein Ablaufdiagramm für die Verschlüsselung der Texte und die Zugriffssicherung,

Fig. 4 eine Anordnung zur Durchführung des Verfahrens.

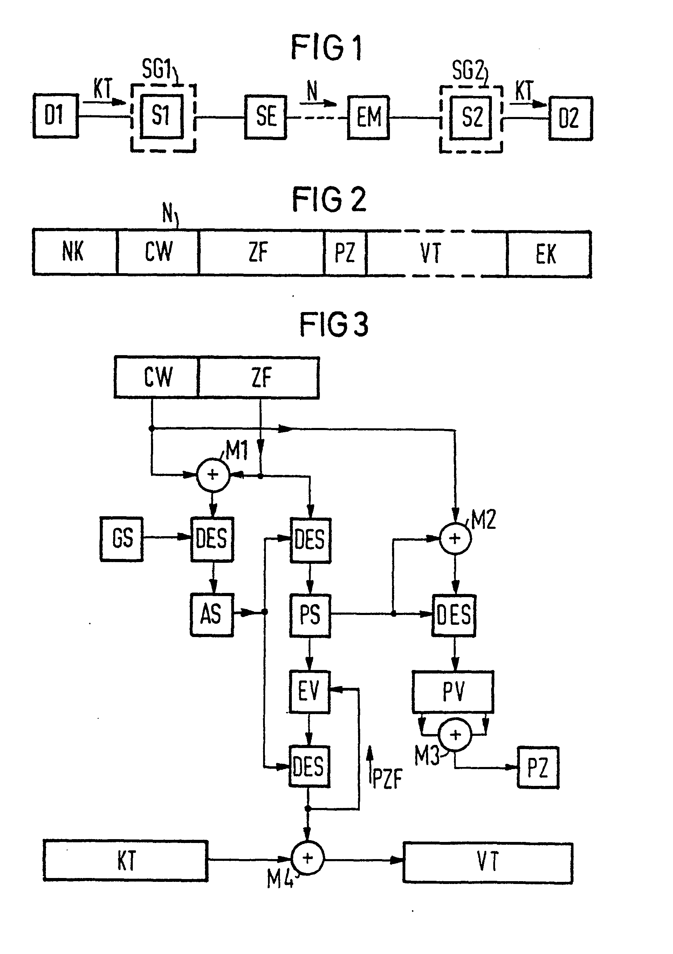

Die Fig. 1 zeigt sendeseitig eine Datenquelle D1, ein erstes Schlüsselgerät SG1 und einen Datensender SE und empfangsseitig einen Datenempfänger EM, ein zweites Schlüsselgerät SG2 und eine Datensenke D2. Das Schlüsselgerät SG1 enthält einen Schlüsselrechner S1, der die von der Datenquelle D1 abgegebenen Klartexte KT verschlüsselt und verschlüsselte Texte an den Datensender SE abgibt. Das Schlüsselgerät SG1 gibt ausserdem an den Datensender SE ein Codewort ab, das der für den verschlüsselten Text empfangsberechtigten Person zugeordnet ist. Weiterhin erzeugt das Schlüsselgerät SG1 eine Zufallsfolge und Prüfzeichen, die aus dem Codewort und der Zufallsfolge unter Verwendung eines aktuellen Schlüssels gebildet werden. Der Datensender SE erzeugt einen Nachrichtenkopf und eine Endekennung. Diese bilden zusammen mit dem Codewort, der Zufallsfolge, den Prüfzeichen und dem verschlüsselten Text die Nachricht N.

Der Datenempfänger EM entfernt von der Nachricht N den Nachrichtenkopf NK und die Endekennung und führt die restlichen Zeichen dem Schlüsselgerät SG2 zu. Wenn im Nachrichtenkopf angegeben ist, dass die Nachricht N einen verschlüsselten Text enthält, wird dieser in einem im Schlüsselgerät SG2 vorgesehenen Empfangsspeicher eingespeichert. Ausserdem werden aus dem empfangenen Codewort und der Zufallsfolge in der empfangenden Station die Prüfzeichen erzeugt und mit den empfangenen Prüfzeichen verglichen, um ggf. eine Manipulation des Codewortes erkennen zu können. Nach der Eingabe eines Passwortes in das Schlüsselgerät SG2 und einer entsprechenden Prüfung wird der verschlüsselte Text unter Verwendung des Schlüsselrechners S2 entschlüsselt und als Klartext KT an der Datensenke D2 ausgegeben.

Die Datenquelle D1, der Datensender SE, der Datenempfänger EM und die Datensenke D2 sind vorzugsweise jeweils Bestandteile einer Fernschreibmaschine, die zusätzlich mit dem Schlüsselgerät SG1 bzw. SG2 versehen ist. Die Fernschreibmaschine kann so ausgebildet sein, dass sie für den normalen Bürobetrieb vorgesehen ist und die Texte unter Umgehung der Schlüsselgeräte SG1 und SG2 in bekannter Weise unverschlüsselt übertragen kann.

Die Schlüsselgeräte SG1 bzw. SG2 eines bestimmten Teilnehmerkreises, beispielsweise eines innerbetrieblichen Übertragungsnetzes, werden vorzugsweise mit dem jeweils gleichen Grundschlüssel versehen. Dieser Grundschlüssel kann von Zeit zu Zeit durch Sicherheitsbeauftragte geändert werden. Es ist auch möglich, einzelnen empfangsberechtigten Personen einen temporären Grundschlüssel zuzuordnen, mit dessen Hilfe Texte auch dann übertragen werden können, wenn die Fernschreibmaschinen an einem anderen als dem innerbetrieblichen Netz angeschlossen sind. Dies ist beispielsweise dann der Fall, wenn sich die empfangsbefugte Person auf einer Dienstreise bei einer Fremdfirma befindet und von dort aus mit der eigenen Firma verschlüsselte Texte austauschen will. Der temporäre Grundschlüssel ist beispielsweise auf einer Ausweiskarte angeordnet, und in diesem Fall kann dann auf die Eingabe eines Passwortes selbstverständlich verzichtet werden, da sich die berechtigte Person bereits durch den temporären Grundschlüssel ausgewiesen hat. In jedem Fall wird jedoch das Codewort übertragen, mit der Zufallsfolge verschlüsselt und in der empfangenden Station überprüft.

Bei der Darstellung in Fig. 2 ist der Aufbau der Nachricht N schematisch dargestellt. Die Nachricht N beginnt mit dem Nachrichtenkopf NK, der beispielsweise angibt, dass in der Nachricht N verschlüsselte Texte VT enthalten sind, die in der empfangenden Station in den Empfangsspeicher einzuspeichern sind. Dem Nachrichtenkopf NK folgt das Codewort CW, das beispielsweise 40 oder 45 Bits enthält und dem empfangenden Teilnehmer zugeordnet ist. Das Codewort CW kann beispielsweise einer allgemein zugänglichen Teilnehmerliste entnommen werden. Anschliessend folgt eine Zufallsfolge ZF, die in der sendenden Station erzeugt wird. Aus dem Codewort CW und der Zufallsfolge ZF wird unter Verwendung des Grundschlüssels ein aktueller Schlüssel für die Verschlüsselung des Klartextes KT erzeugt. Ausserdem wird aus dem Codewort CW und der Zufallsfolge ZF, gegebenenfalls unter Verwendung des aktuellen Schlüssels, ein Prüfvektor erzeugt, der seinerseits wiederum verschlüsselt wird und die Prüfzeichen PZ ergibt. Im Anschluss an die Prüfzeichen PZ folgt der verschlüsselte Text VT und die Nachricht N wird durch eine Endekennung EK beendet.

Die Darstellung in Fig. 3 zeigt schematisch die Abläufe, die im Schlüsselgerät SG1 bei der Erzeugung der Prüfzeichen PZ und bei der Erzeugung des verschlüsselten Textes VT aus einem Klartext KT durchgeführt werden. Entsprechende Vorgänge laufen auch im Schlüsselgerät SG2 ab, wobei aus dem verschlüsselten Text VT wieder der Klartext KT erzeugt wird, und wobei zusätzlich die ermittelten Prüfzeichen mit den übertragenen Prüfzeichen PZ verglichen werden, um ggf. eine Ausgabe des übertragenen Textes an der empfangenden Station zu verhindern.

Nach der Eingabe des Codewortes CW an der Datenquelle D1 erzeugt der Schlüsselrechner S1 eine Zufallsfolge ZF und verknüpft diese entsprechend einer Modulo-2-Addition M1 mit dem Codewort CW. Das Ergebnis wird in einer Verschlüsselungseinheit entsprechend dem allgemein bekannten DES-Algorithmus unter Verwendung eines Grundschlüssels GS verschlüsselt. Das Verschlüsselungsergebnis bildet den aktuellen Schlüssel AS für die vorgesehene Übertragung von Texten. Die Zufallsfolge ZF wird für die Erzeugung der Prüfzeichen PZ unter Verwendung des aktuellen Schlüssels AS ebenfalls entsprechend dem DES-Algorithmus in einer Verschlüsselungseinheit verschlüsselt. Das Ergebnis bildet einen Prüfschlüssel PS. Dieser wird mit dem Codewort CW unter Verwendung einer Modulo-2-Addition M2 verschlüsselt. Das Ergebnis wird anschliessend entsprechend dem DES-Algorithmus wiederum verschlüsselt, um einen Prüfvektor PV zu erzeugen. Der Prüfvektor PV wird in zwei Hälften aufgeteilt, die miteinander entsprechend einer Modulo-2-Addition M3 verknüpft werden und die Prüfzeichen PZ bilden, die innerhalb der Nachricht N von der sendenden Station zur empfangenden Station übertragen werden. In dem Schlüsselrechner S2 der empfangenden Station werden diese Prüfzeichen PZ mit den empfangenen Prüfzeichen PZ verglichen, um festzustellen, ob die Zugriffsberechtigung vorliegt oder ob das Codewort CW manipuliert wurde.

Unter Verwendung des aktuellen Schlüssels AS wird mittels der Verschlüsselungseinheit entsprechend dem DES-Algorithmus eine Pseudozufallsfolge PZF erzeugt, wobei der Prüfschlüssel PS einen Eingangsvektor EV bildet. Mittels dieser Pseudozufallsfolge PZF wird entsprechend einer Modulo-2-Addition M4 der Klartext KT verschlüsselt, um den verschlüsselten Text VT zu erzeugen.

Bei der Erzeugung des aktuellen Schlüssels AS, des Prüfschlüssels PS und des Prüfvektors PV arbeitet die Verschlüsselungseinheit als Blockverschlüsseler ohne Rückkopplung (code book). Bei der Erzeugung der Pseudozufallsfolge PZF arbeitet die Verschlüsselungseinheit dagegen in einem Chiffrier-Rückkopplungsmodus als Pseudozufallsgenerator. Diese Betriebsweisen sind an sich bekannt und beispielsweise von einem integrierten Schaltkreis durchführbar, der im Handel unter der Bezeichnung WD2001 von der Firma Western Digital erhältlich ist.

Das Codewort CW enthält beispielsweise acht oder neun alphanumerische Zeichen, die beispielsweise entsprechend dem internationalen Telegrafenalphabet Nummer 2 durch 40 bzw. 45 Bits dargestellt werden. Die Zufallsfolge ZF weist beispielsweise 64 Bits auf, während die Prüfzeichen PZ beispielsweise 32 Bits aufweisen. Der Grundschlüssel GS, der aktuelle Schlüssel AS und der Prüfschlüssel PS weisen beispielsweise jeweils 56 Bits auf.

Bei der Modulo-2-Addition M2 kann anstelle des Prüfschlüssels PS auch die Zufallsfolge ZF verwendet werden. Weiterhin ist es auch denkbar, die Prüfzeichen PZ dadurch zu erzeugen, dass das Codewort CW unter Verwendung des aktuellen Schlüssels AS mit jeweils einem Teil der Zufallsfolge ZF verschlüsselt wird und die Ergebnisse ihrerseits entsprechend einer Modulo-2-Addition miteinander verschlüsselt werden.

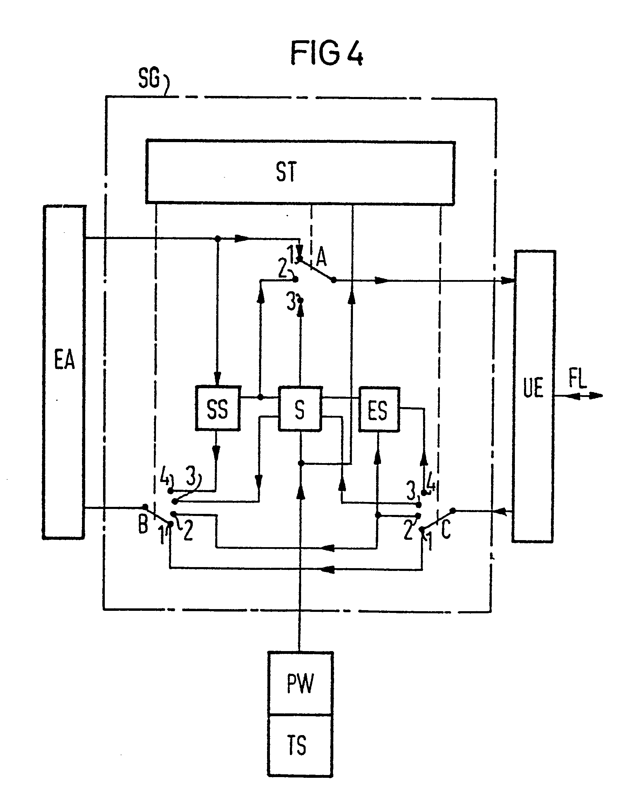

Die in Fig. 4 dargestellte Anordnung zur Durchführung des Verfahrens kann sowohl als sendende als auch empfangende Station verwendet werden. Eine Ein-Ausgabeeinheit EA übernimmt in diesem Fall die Funktion der Datenquelle D1 bzw. der Datensenke D2 und eine Übertragungseinheit UE entspricht dem Datensender SE bzw. dem Datenempfänger EM. Das Schlüsselgerät SG mit seinem Schlüsselrechner S entspricht den Schlüsselgeräten SG1 und SG2 bzw. den Schlüsselrechnern S1 und S2. Die Ein-Ausgabeeinheit EA und die Übertragungseinheit UE können Bestandteile einer bekannten Fernschreibmaschine sein, die zusätzlich mit dem Schlüsselgerät SG versehen ist.

Das Schlüsselgerät SG enthält drei Schalter A, B und C, die durch eine Steuereinheit ST in verschiedene Schaltstellungen gebracht werden. Wenn die Schalter A, B und C jeweils die Schaltstellung 1 aufweisen, ist das Schlüsselgerät SG abgeschaltet und die Fernschreibmaschine arbeitet in bekannter Weise, indem die mittels der Ein-Ausgabeeinheit EA eingegebenen Texte zur Übertragungseinheit UE durchgeschaltet werden und von dort an die Fernleitung FL weitergegeben werden. In entsprechender Weise werden empfangene Texte von der Übertragungseinheit UE zur Ein-Ausgabeeinheit EA durchgeschaltet und dort ausgegeben.

Die eingegebenen Texte können im Sendespeicher SS gespeichert werden und von diesem im Leitungsbetrieb an die Fernleitung FL abgegeben werden, wenn der Schalter A die Schaltstellung 2 einnimmt. Im Lokalbetrieb kann der Inhalt des Sendespeichers SS auch ausgegeben werden. Zu diesem Zweck nimmt der Schalter B die Schaltstellung 4 ein. Mit Hilfe des Sendespeichers SS ist es möglich, erstellte Nachrichten zu redigieren.

Im Verschlüsselungsbetrieb wird der Inhalt des Sendespeichers SS dem Schlüsselrechner S zugeführt, der den Klartext verschlüsselt und den verschlüsselten Text VT mit dem Codewort CW, der Zufallsfolge ZF und den Prüfzeichen PZ versieht und zusätzlich den Nachrichtenkopf NK und die Endekennung EK erzeugt. Wenn der Schalter A die Schaltstellung 3 einnimmt, wird die auf diese Weise erzeugte Nachricht N über die Übertragungseinheit UE zur Fernleitung FL abgegeben. Wenn die Steuereinheit ST erkennt, dass ein verschlüsselter Text VT empfangen werden soll, nehmen die Schalter B und C die Schaltstellung 2 ein und ein Teil der Nachricht N, beispielsweise der Nachrichtenkopf NK und das Codewort CW werden an der Ein-Ausgabeeinheit EA ausgegeben, während der Rest der Nachricht, insbesondere der verschlüsselte Text VT, in den Empfangsspeicher ES eingespeichert wird. Eine Ausgabe des Textes ist nur dann möglich, wenn von einer berechtigten Person ein Passwort PW oder der temporäre Schlüssel TS eingegeben wird. In diesem Fall wird der im Empfangsspeicher ES gespeicherte Text im Schlüsselrechner S entschlüsselt und an der Ein-Ausgabeeinheit EA ausgegeben, wenn der Schalter B die Schaltstellung 3 einnimmt. Das Passwort PW wird in der Steuereinheit ST auf seine Richtigkeit bzw. auf die richtige Zuordnung zum empfangenen Codewort CW überprüft. Bei einer Nichtübereinstimmung wird eine Ausgabe des Textes verhindert. Dies erfolgt auch dann, wenn die im Schlüsselrechner S ermittelten Prüfzeichen nicht mit den empfangenen Prüfzeichen PZ übereinstimmen.

Bei Verwendung des temporären Schlüssels TS wird das Passwort PW nicht überprüft und der verschlüsselte Text VT wird unter Verwendung des temporären Schlüssels TS in dem Schlüsselrechner S entschlüsselt und an der Ein-Ausgabeeinheit EA ausgegeben. Mit Hilfe des Schlüsselgerätes SG ist es auch möglich, Texte im Lokalbetrieb zu entschlüsseln. Zu diesem Zweck nehmen die Schalter B und C die Schaltstellung 3 an. Es ist auch möglich, grundsätzlich alle empfangenen Nachrichten in dem Empfangsspeicher ES zu speichern, wenn der Schalter C die Schaltstellung 4 einnimmt.

## Patentansprüche

1. Verfahren zum Übertragen von verschlüsselten Texten von einer sendenden Station zu einer empfangenden Station, bei dem die Texte in der sendenden Station verschlüsselt werden und in der empfangenden Station entschlüsselt werden, bei dem die Verschlüsselung mittels eines aktuellen Schlüssels erfolgt, der seinerseits unter Verwendung eines Grundschlüssels erzeugt wird, und bei dem die übertragenen verschlüsselten Texte in der empfangenden Station in einem Empfangsspeicher gespeichert werden und nur an eine empfangsberechtigte Person ausgegeben werden, gekennzeichnet durch folgende Verfahrensschritte:
a) Aus einem der empfangsberechtigten Person zugeordneten Codewort (CW) und einer in der sendenden Station erzeugten Zufallsfolge (ZF) werden Prüfzeichen (PZ) erzeugt.
b) Unter Verwendung des Codewortes (CW), der Zufallsfolge (ZF) und des Grundschlüssels (GS) wird ein aktueller Schlüssel (AS) erzeugt, mittels dem aus einem Klartext (KT) der verschlüsselte Text (VT) erzeugt wird.
c) Das Codewort (CW), die Zufallsfolge (ZF), die Prüfzeichen (PZ) und der verschlüsselte Text (VT) werden von der sendenden Station zur empfangenden Station übertragen.
d) In der empfangenden Station werden in gleicher Weise wie in der sendenden Station die Prüfzeichen (PZ) erzeugt.
e) Die in der empfangenden Station erzeugten Prüfzeichen werden mit den empfangenen Prüfzeichen (PZ) verglichen.
f) Bei Übereinstimmung werden die verschlüsselten Texte, ggf. nach Prüfung eines Passwortes, entschlüsselt und ausgegeben.

2. Verfahren nach Anspruch 1, dadurch gekennzeichnet, dass zur Erzeugung des aktuellen Schlüssels (AS) das Codewort (CW) und die Zufallsfolge (ZF) entsprechend einer Modulo-2-Addition verschlüsselt werden und dass anschliessend in einer Verschlüsselungseinheit unter Verwendung des Grundschlüssels (GS) der aktuelle Schlüssel (AS) erzeugt wird.

3. Verfahren nach einem der beiden Ansprüche 1 oder 2, dadurch gekennzeichnet, dass bei der Erzeugung der Prüfzeichen (PZ) das Codewort (CW) mit der Zufallsfolge (ZF) entsprechend einer Modulo-2-Addition (M2) verschlüsselt wird, dass das Verschlüsselungsergebnis anschliessend nochmals verschlüsselt wird und ein entstehender Prüfvektor (PV) in sich wiederum entsprechend einer Modulo-2-Addition (M3) verschlüsselt wird, um die Prüfzeichen (PZ) zu erzeugen.

4. Verfahren nach Anspruch 3, dadurch gekennzeichnet, dass die Zufallsfolge vor der Verschlüsselung mit dem Codewort (CW) unter Verwendung des aktuellen Schlüssels (AS) in der Verschlüsselungseinheit verschlüsselt wird.

5. Verfahren nach Anspruch 3, dadurch gekennzeichnet, dass bei der Verschlüsselung des Prüfvektors (PV) ein die niederwertigen Bits enthaltender erster Teil mit einem die höherwertigen Bits enthaltenden zweiten Teil verschlüsselt wird.

6. Verfahren nach einem der Ansprüche 1 bis 5, dadurch gekennzeichnet, dass die Verschlüsselung unter Verwendung einer Verschlüsselungseinheit erfolgt, die aus einem an sich bekannten DES-Baustein besteht, der bei der Erzeugung des aktuellen Schlüssels (AS), des Prüfschlüssels (PS) und der Prüfzeichen (PZ) als Blockverschlüssler ohne Rückkopplung arbeitet und der bei der Erzeugung der Pseudozufallsfolge (PZF) im Rückkopplungsmodus als Pseudozufallsgenerator arbeitet.

7. Verfahren nach Anspruch 6, dadurch gekennzeichnet, dass der Prüfschlüssel (PS) als Eingangsvektor (EV) für die Verschlüsselungseinheit bei der Erzeugung der Pseudozufallsfolge (PZF) dient.

8. Verfahren nach einem der Ansprüche 1 bis 7, dadurch gekennzeichnet, dass als Grundschlüssel (GS) ein temporärer Grundschlüssel (TS) vorgesehen ist, der von der empfangsberechtigten Person an der empfangenden Station eingegeben wird, und dass bei der Verwendung des temporären Grundschlüssels (TS) keine Eingabe eines Passwortes (PW) erfolgt.

9. Anordnung zur Durchführung des Verfahrens nach Anspruch 1, dadurch gekennzeichnet, dass ein Schlüsselgerät (SG) vorgesehen ist, das im Verbindungsweg zwischen der Ein-Ausgabeeinheit (EA) und der Übertragungseinheit (UE) einer Textstation angeordnet ist, dass das Schlüsselgerät (SG) einen Schlüsselrechner (S) enthält, der sowohl sendeseitig als auch empfangsseitig aus einem der empfangsberechtigten Person zugeordneten Codewort (CW) und einer Zufallsfolge (ZF) Prüfzeichen (PZ) ermittelt, und der unter Verwendung des Grundschlüssels den aktuellen Schlüssel ermittelt und sendeseitig einen Klartext (KT) in einen verschlüsselten Text (VT) umsetzt bzw. empfangsseitig den verschlüsselten Text (VT) in einen Klartext (KT) umsetzt, und dass empfangsseitig ein Empfangsspeicher (ES) vorgesehen ist, in dem mindestens der verschlüsselte Text (VT) zwischengespeichert wird und nur bei einer Übereinstimmung der empfangsseitig erzeugten Prüfzeichen und der empfangenen Prüfzeichen (PZ) unter Steuerung durch eine Steuereinheit (ST) an der Ein-Ausgabeeinheit (EA) ausgegeben wird.

10. Anordnung nach Anspruch 8, dadurch gekennzeichnet, dass in der sendenden Station dem Schlüsselrechner (S) ein Sendespeicher (SS) vorgeschaltet ist, in dem der Klartext (KT) vor seiner Verschlüsselung speicherbar und redigierbar ist.

## Claims

1. A method of transmitting coded texts from a transmitting station to a receiving station, wherein the texts are coded in the transmitting station and decoded in the receiving station, wherein the coding is effected by means of an actual code which on its part is coded by the use of a base code, and wherein the transmitted coded texts in the receiving station are stored in a receiving store and only transmitted to a person who is authorised to receive, characterised by the following method steps:

(*a*) test characters (PZ) are produced from a code word (CW) assigned to the person who is authorised to receive and from a random sequence (ZF) produced in the transmitting station;

(*b*) employing the code word (CW), the random sequence (ZF) and the base code (GS), an actual code (AS) is produced, by means of which the coded text (VT) is produced from a clear text (KT);

(*c*) the code word (CW), the random sequence (ZF), the test characters (PZ) and the coded text (VT) are transmitted from the transmitting station to the receiving station;

(*d*) in the receiving station, the test characters (PZ) are produced in the same manner as in the transmitting station;

(*e*) the test characters produced in the receiving station are compared with the received test characters;

(*f*) in the case of conformity the coded texts are decoded and transmitted if necessary after checking a pass word.

2. A method as claimed in Claim 1, characterised in that in order to produce the actual code (AS), the code word (CW) and the random sequence (ZF) are coded in accordance with a modulo-2-addition and that the actual code (AS) is subsequently produced in a coding unit employing the base code (GS).

3. A method as claimed in Claim 1 or Claim 2, characterised in that when the test characters (PZ) are produced the code word (CW) is coded with the random sequence (ZF) in accordance with a modulo-2-addition (M2), that the coding result is subsequently coded once more and an occurring test vector (PV) is coded in itself in accordance with a modulo-2-addition (M3) in order to produce the test characters (PZ).

4. A method as claimed in Claim 3, characterised in that prior to the coding with the code word (CW), the random sequence is coded in the coding unit employing the actual code (AS).

5. A method as claimed in Claim 3, characterised in that when coding the test vector (PV) a first component containing the low-value bits is coded with a second component containing the high-value bits.

6. A method as claimed in one of Claims 1 to 5, characterised in that the coding is effected by using a coding unit which comprises a DES-module which is known *per se* and operates as a block coder without feedback during the production of the actual code (AS), the test code (PS) and the test characters (PZ) and which during the production of the pseudo-random sequence (PZF) operates as a pseudo-random generator in the feedback mode.

7. A method as claimed in Claim 6, characterised in that the test code (PS) serves as an input vector (EV) for the coding unit when the pseudo-random sequence (PZF) is produced.

8. A method as claimed in one of Claims 1 to 7, characterised in that as a base code (GS) there is arranged a temporary base code (TS) which is input by the person, who is authorised to receive, at the receiving station, and that when employing the temporary base code (TS) an input of a pass word (PW) is not carried out.

9. An arrangement for carrying out the method as claimed in Claim 1, characterised in that there is provided a code apparatus (SG) which is arranged in the connection path between the in-output unit (EA) and the transmission unit (UE) of a text station, that the code apparatus (SG) comprises a code computer (S) which both at the transmitting end and at the receiving end determines test characters (PZ) from a code word (CW) which is assigned to a person authorised to receive and from a random sequence (ZF), and which code computer determines the actual code employing the base code and converts a clear text (KT) into a coded text (VT) at the transmitting end or converts the coded text (VT) into a clear text (KT) at the receiving end, as the case may be, and that at the receiving end, there is arranged a receiving store (ES) wherein at least the coded text (VT) is intermediately stored and only transmitted at the in-output unit (EA) by controlling through a control unit (ST) in the case of a conformity of the test characters produced at the receiving end and the received test characters (PZ).

10. An arrangement as claimed in Claim 8, characterised in that in the transmitting station the code computer (S) is preceded by a transmitting store (SS) wherein the clear text (KT) can be stored and edited prior to its coding.

## Revendications

1. Procédé pour transmettre des textes codés d'un poste émetteur à un poste récepteur, selon lequel les textes sont codés dans le poste émetteur et sont décodés dans le poste récepteur, et le codage est réalisé au moyen d'un code actuel qui est produit, pour sa part, moyennant l'utilisation d'un code de base, et dans lequel les textes codés transmis sont mémorisés dans une mémoire de réception dans le poste récepteur et ne sont envoyés qu'à une personne autorisée à effectuer la réception, caractérisé par les phases opératoires suivantes:

a) des caractères de contrôle (PZ) sont produits à partir d'un mot de code (CW) associé à la personne autorisée à la réception et à partir d'une suite de signaux aléatoires (ZF) produite dans le poste émetteur,

b) moyennant l'utilisation du mot de code (CW), de la suite de signaux aléatoires (ZF) et du code de base (GS), on produit un code actuel (AS) à l'aide duquel le texte codé (VT) est obtenu à partir d'un texte en clair (KT),

c) le mot de code (CW), la suite de signaux aléatoires (ZF), les caractères de contrôle (PZ) et le texte codé (VT) sont transmis par le poste émetteur au poste récepteur,

d) dans le poste récepteur, les caractères de contrôle (PZ) sont produits de la même façon que dans le poste émetteur,

e) les caractères de contrôle produits dans le poste récepteur sont comparés aux caractères de contrôle (PZ) reçus, et

f) en cas de coïncidence, les textes codés sont décodés et délivrés éventuellement après contrôle d'un mot de passe.

2. Procédé suivant la revendication 1, caractérisé par le fait que, pour la production du code actuel (AS), le mot de code (CW) et la suite de signaux aléatoires (ZF) sont codés selon une addition modulo 2 et qu'ensuite le code réel (AS) est produit dans une unité de codage moyennant l'utilisation du code de base (GS).

3. Procédé suivant l'une des revendications 1 ou 2, caractérisé par le fait que, lors de la production des caractères de contrôle (PZ), le mot de code (CW) est codé avec la suite de signaux aléatoires (ZF) conformément à une addition modulo 2 (M2), que le résultat du codage est ensuite à nouveau codé et qu'un vecteur de contrôle obtenu (PV) est en soi codé à nouveau conformément à une addition modulo 2 (M3), afin de fournir les caractères de contrôle (PZ).

4. Procédé suivant la revendication 3, caractérisé par le fait que la suite de signaux aléatoires est codée dans l'unité de codage moyennant l'utilisation du code actuel (AS), avant le codage réalisé avec le mot de code (CW).

5. Procédé suivant la revendication 3, caractérisé par le fait que dans le cas du codage du vecteur de contrôle (PV), une première partie contenant les bits de poids inférieur est codée avec une seconde partie contenant les bits de poids supérieurs.

6. Procédé suivant l'une des revendications 1 à 5, caractérisé par le fait que le codage est réalisé moyennant l'utilisation d'une unité de codage qui est constituée par un module DES connu en soi qui, lors de la production du code actuel (AS), du code de contrôle (PS) et des caractères de contrôle (PZ), fonctionne en tant que codeur de blocs sans réaction et qui, lors de la production de la suite de signaux pseudo-aléatoires (PZF), travaille selon le mode de réaction en tant que générateur de signaux pseudo-aléatoires.

7. Procédé suivant la revendication 6, caractérisé par le fait que le code de contrôle (PS) sert de vecteur d'entrée (EV) pour l'unité de codage lors de la production de la suite de signaux pseudo-aléatoires (PZF).

8. Procédé suivant l'une des revendications 1 à 7, caractérisé par le fait qu'il est prévu comme code de base (GS) un code de base temporaire (TS) qui est introduit par la personne autorisée à réaliser la réception, dans le poste récepteur, et que, lors de l'utilisation du code de base temporaire (TS), il n'intervient aucune introduction d'un mot de passe (PW).

9. Dispositif pour la mise en œuvre du procédé suivant la revendication 1, caractérisé par le fait qu'il est prévu un appareil de codage (SG) qui est disposé dans la voie de liaison entre l'unité d'entrée/sortie (EA) et l'unité de transmission (UE) d'un poste de transmission de textes, que l'appareil de codage (SG) contient un calculateur de code (S) qui détermine aussi bien du côté émission que du côté réception des caractères de contrôle (PZ), à partir d'un mot de code (CW) associé à la personne autorisée à la réception et à partir d'une suite de signaux aléatoires (ZF), et qui détermine le code actuel moyennant l'utilisation du code de base et transforme du côté émission un texte en clair (KT) en un texte codé (VT) et transforme du côté réception le texte codé (VT) en un texte en clair (AT), et que du côté réception il est prévu une mémoire de réception (ES) dans laquelle au moins le texte codé (VT) est mémorisé temporairement, ce texte n'étant délivré à l'unité d'entrée/sortie (EA) que dans le cas d'une coïncidence entre les caractères de contrôle obtenus du côté réception et les caractères de contrôle (PZ) reçus, sous la commande d'une unité de commande (ST).

10. Dispositif suivant la revendication 8, caractérisé par le fait qu'une mémoire d'émission (SS), dans laquelle le texte en clair (KT) peut être mémorisé et rédigé avant son codage, est branchée en amont du calculateur de code (S), dans le poste émetteur.

# FIG 1

# FIG 2

# FIG 3

# FIG 4